# EUROPEAN PATENT APPLICATION

(11) **EP 4 613 467 A1**
(43) Date of publication of application: **10.09.2025**
(21) Application number: 24382248.3
(22) Date of filing: 07.03.2024
(51) Int. Cl.: B29C 70/54, B29C 70/44, B29D 99/00, F03D 1/06, B29C 33/00

(54) **COMPOSITE MOULDING ASSEMBLY**

(71) Applicant: Siemens Gamesa Renewable Energy Innovation & Technology S.L., 48170 Zamudio, Vizcaya (ES)
(72) Inventor: Correa, Leonardo, Sarriguren (ES)
(74) Representative: SGRE-Association

(57) **Abstract**

The invention describes a composite moulding assembly (1) comprising a mould (10) for receiving a layup (20), a number of resin inlets and resin channels (108) arranged about the mould (10), and a number of air extraction ports (104) arranged about the mould (10); a resin infusion arrangement configured to convey resin (110) to the resin inlets; a vacuum arrangement comprising a number of vacuum bags (120) arranged to separate the layup (20) from a mould interior cavity (10C), and a means (12, 122) of extracting air from the layup (20); and a cavity overpressure arrangement (13, 132) configured to create a cavity overpressure (P10C) in the mould interior cavity (10C) during a resin infusion procedure. The invention further describes a method of moulding a composite (2) using such a composite moulding assembly (1); and a wind turbine rotor blade (2) manufactured using such a composite moulding assembly (1).

## Description

### Background

A wind turbine rotor blade is generally a composite, made by assembling layers of fibre-reinforced material (FRM) and any number of prefabricated parts in a mould to form the desired layup, extracting air from the layup, infusing resin through the layup, and subsequently curing the resin.

Instead of forming the pressure side and suction side of a rotor blade using separate half-moulds and then bonding the rotor blade halves along their perimeters, a rotor blade can be manufactured in one piece using a "closed mould" or "integral mould" technique. Here, the layup for one side of the future rotor blade, including the spar, is prepared in a lower mould half; the layup for the other side is prepared on top of this, one or more vacuum bags are placed in the interior, and an upper mould half is placed over the complete layup. After sealing the mould, a resin supply is connected to resin inlet ports, a vacuum assembly is connected to air extraction ports and actuated to establish a vacuum in the layup, so that resin is infused through the complete layup. The infused layup is subsequently cured, after which the complete rotor blade is de-moulded and finished. The "closed mould" approach has various advantages, for example the absence of any possibly weak joint between pressure side and suction side, and the time saved by not having to prepare surfaces in order to form such a joint.

To achieve the necessary structural strength, it is very important that resin infusion is uniform throughout all FRM layers, i.e. air gaps or similar defects must be avoided, and the fibre-to-resin ratio should be as uniform as possible throughout the rotor blade. Any undesirably low fibre-to-resin ratio (i.e. using more resin than needed) is indicative of inefficient resin consumption. Furthermore, a low fibre-to-resin ratio makes the cured material more brittle, reducing the structural strength of the composite. It is also important to avoid resin pooling in lower regions of the layup. A resin pool (appearing as excess liquid resin collecting under the vacuum bag) causes problems in the exothermic curing process, since the resulting high temperature in the excess resin can melt various process materials such as the vacuum bag, causing loss of vacuum and complete process failure. In the prior art, such problems are avoided by timely reduction of the resin pressure.

To ensure even resin distribution, resin inlet ports are provided at suitable locations along the mould such as the root region and the tip region of a rotor blade mould, and connected to resin channels extending through the mould, e.g. along the edges of the layup that correspond to the leading edge and trailing edge of the rotor blade. Resin therefore enters the layup from the channels along the outer edges, and is drawn under vacuum through the layers of FRM. A resin channel may also extend along the highest region of the mould to assist in wetting the upper regions of the layup.

In a "low to high" infusion mode, resin enters at some level in the mould and rises upwards to higher levels of the layup. In a "high to low" infusion mode, resin enters at a higher level in the mould and descends through the layup.

It may take some time for the resin flow fronts to pass through or "wet" the entire layup. For example, for a closed mould of a 100 m rotor blade with a 4.5 m root end diameter, wetting can take up to 5 hours. The wetting cycle time is determined by a number of factors, primarily by the pressure differential during infusion, i.e. the difference between resin pressure and the vacuum pressure in the layup. The resin pressure shall be understood as the pressure measured at the lowest level of the layup at a point along the mould (since the lowest layup level may vary along the mould, the resin pressure and the pressure differential are variables).

Initially, an overpressure - i.e. a pressure that is higher than atmospheric pressure - can be applied to the resin supply to obtain a favourable infusion rate. However, it is necessary to remove this resin overpressure at a suitable point in time in order to avoid the formation of resin pools, which would rise to a height determined by the resin overpressure. As explained above, it is crucial to avoid the formation of resin pools.

Since it is generally not possible to achieve a perfect vacuum in the layup, the achievable pressure differential in the last phase of infusion is effectively at most 1 bar (the difference between atmospheric pressure and the achievable vacuum). However, this pressure differential cannot achieve satisfactory wetting in the layup above a certain height. Regardless of the infusion mode, the pull of gravity and the limited pressure differential ultimately place a limit on the height to which the resin can climb (in a "low to high" infusion technique) or the height at which the layup will remain wetted (in a "high to low" infusion technique).

The highest achievable pressure differential of 1 atmosphere ("limited pressure differential" in the following) therefore places a limit on the maximum height of the layup, i.e. the difference between the highest and lowest points in the layup. In the case of a rotor blade mould, the highest point of the layup can be found in the root end, for example. In the case of a closed mould for a pre-bent rotor blade, the highest point of the layup may equally be found in the tip end. The limited pressure differential therefore places a constraint on the relevant dimension, e.g. the maximum root end diameter, the maximum degree of pre-bend, etc. The root end diameter in turn places a limit on the rotor blade length, which in turn determines the maximum power output of the wind turbine.

It is therefore an object of the invention to provide a resin infusion technique that overcomes the problems outlined above.

This object is achieved by the claimed composite moulding assembly; by the claimed method of moulding a composite; and by the claimed wind turbine rotor blade.

### Description

According to the invention, the composite moulding assembly comprises a mould for receiving a layup, a number of resin inlets and resin channels arranged about the mould, and a number of air extraction ports arranged about the mould. The moulding assembly further comprises a resin infusion arrangement configured to convey resin from a resin container to the resin inlets; and a vacuum arrangement comprising a number of vacuum bags arranged to separate the layup from a mould interior cavity, and a means of extracting air from the layup through the air extraction ports. The inventive composite moulding assembly is characterized by a means of creating an overpressure in the mould interior cavity, referred to as "cavity overpressure" herein. As explained above, an "overpressure" shall be understood as the amount by which the relevant pressure exceeds atmospheric pressure. The cavity overpressure is uniform throughout the cavity in the layup interior, i.e. the cavity overpressure acts uniformly against the entire interior surface of the layup.

The inventive method of moulding a composite comprises steps of forming a layup in the mould of such a composite moulding assembly; arranging a number of vacuum bags to separate the layup from a mould interior cavity; and actuating the vacuum arrangement to extract air from the layup and to draw resin into the layup through the resin inlet ports; and creating a cavity overpressure inside the mould during the infusion stage.

The invention is based on the insight that the flow rate of the resin can be increased to some extent by judicious application of a cavity overpressure. The inventor has realised that, by increasing the pressure against the layup inside the mould, i.e. by creating a cavity overpressure, it is possible to achieve a favourably even resin distribution through the entire layup and to avoid resin pooling at all stages of infusion. In other words, the cavity overpressure, which acts uniformly against the layup, essentially counteracts the resin pressure within the layup, and this balance of pressure ensures that liquid resin in the lower layup regions will not form a resin pool, and that liquid resin in the higher layup regions will remain there, i.e. the higher layup regions will remain wetted.

The inventive approach has several advantages. One advantage is that the time to complete resin infusion can be decreased significantly, since the cavity overpressure can be applied as required during the infusion stage and can be maintained into the curing stage. This advantage applies to a closed-mould layup of any size. A shorter infusion time contributes to a shorter manufacturing cycle time. Another advantage of the shorter infusion time is that it allows the use of resin with a shorter pot life, i.e. resin that cures more rapidly. These factors, which apply to a closed-mould layup of any size, all contribute to advantageously reduced manufacturing costs.

Another advantage of the inventive approach is that the cavity overpressure can act to compress the layup to some extent, resulting in a reduction in resin consumption. The inventive approach can ensure that only the minimum amount of resin (i.e. the amount required to thoroughly wet the layup) infuses through the layup. A reduced resin consumption results in a reduction in weight of the composite (compared to an equivalent composite manufactured using a prior art technique) without detracting from its structural strength. This advantage applies to a closed-mould layup of any size.

Particularly advantageous embodiments and features of the invention are given by the dependent claims, as revealed in the following description. Features of different claim categories may be combined as appropriate to give further embodiments not described herein.

In the following, it may be assumed that the mould of the inventive assembly is dimensioned for a wind turbine rotor blade, i.e. the composite manufactured using the inventive assembly is a rotor blade. In the following, without restricting the invention in any way, it may be assumed that the mould comprises a lower mould half and an upper mould half. Preferably, the mould comprises a means of sealing the mould halves against the cavity overpressure.

The mould can comprise any suitable arrangement of resin inlet ports or "resin inlets". In a particularly preferred embodiment of the invention, the mould is provided with a resin inlet in the root end region of the mould, and/or a resin inlet in the tip end region. Resin cavities or resin channels are connected to the resin inlet(s) and arranged to distribute the liquid resin along the sides of the layup. In the case of a rotor blade mould, resin channels can be arranged along the "trailing edge" and "leading edge" regions of the mould and layup. Alternatively or in addition, the mould can be provided with a number of resin channels arranged along the upper region of the layup.

A vacuum bag is generally formed from a long tube of thin polymer, and cut to the desired length. Each open end of the tube is bunched tightly and sealed. To establish a vacuum in the layup interior, air is extracted from the sealed mould through air extraction ports. A mould constructed for VARTM generally comprises a suitable arrangement of air extraction ports, which are arranged to open into the layup. When a vacuum is created by extracting air from the layup, the vacuum bags are effectively sucked against the inner surfaces of the layup, so that each vacuum bag effectively defines a mould interior cavity.

A cavity overpressure can be achieved using any suitable means. In a particularly preferred embodiment of the invention, the cavity overpressure arrangement comprises a pressurized air supply arranged to convey pressurized air into the vacuum bag(s). To this end, the inventive composite moulding assembly preferably comprises a suitable number of air inlets. An air inlet preferably opens into the interior of a vacuum bag. A suitable sealing arrangement is deployed to ensure an airtight seal between the mould exterior and the mould interior cavity, so that pressurized air can be injected into the vacuum bag(s) in the mould interior cavity to create the desired cavity overpressure. An air inlet can be arranged at any suitable location, for example in a root end cover of the mould, so that the air inlet does not need to extend through the actual layup.

At least at the end of the infusion stage (when the resin has thoroughly wetted the entire layup) and until the resin has cured, the cavity overpressure must be at least as great as the highest resin pressure, i.e. the highest resin pressure should not exceed the cavity overpressure, in order to prevent the formation of resin pools in the lower layup regions.

As explained above, an overpressure in the resin (or "resin overpressure") can be helpful in the early stages of infusion, but the prior art moulding methods must remove resin overpressure in the later stages of infusion in order to prevent resin pooling, so that the prior art approach is associated with a limited achievable layup height.

The inventor has realised that a suitable cavity overpressure acting against the layup would counteract such unwanted side-effects of resin overpressure. Therefore, in a particularly preferred embodiment of the invention, the composite moulding assembly also includes a means of creating an overpressure in the resin. The resin overpressure can be established in a number of ways. For example, the inventive composite moulding assembly can deploy a direct infusion apparatus that can be controlled to regulate the resin pressure as desired. Alternatively or in addition, the resin overpressure can be adjusted as desired by adjusting the height of the resin container.

Owing to the weight of the resin, the resin pressure at any point along the mould is greatest at the lowest level of the layup. Furthermore, at any point along the mould, the resin pressure in the lowest layup level could be an overpressure (i.e. greater than atmospheric pressure), while being below atmospheric pressure in a higher layup level. In the following, it shall be understood that, at any point along the mould, a resin overpressure exists if the resin pressure at the lowest layup level exceeds atmospheric pressure.

The resin overpressure effectively raises the achievable pressure differential above the limited pressure differential described above, and this increased pressure differential translates into a height differential which can be understood as the additional height to which resin can be infused,i.e. a gain in the mould's vertical dimension. By increasing this mould dimension compared to a prior art integral mould, it is possible to manufacture correspondingly larger composites. In other words, the invention advantageously overcomes the size limitation for a composite manufactured using the prior art approach. In particular, the layup height (root diameter and/or tip height) achievable with the inventive composite moulding assembly can exceed the layup height of a prior art moulding assembly, for example by 1 metre. Any increase in such rotor blade dimensions, as explained above, can significantly increase the achievable power output of a wind turbine.

In a resin infusion technique, it is known to arrange the resin container so that, at atmospheric pressure, the level of the resin is no higher than the lowest part of the layup in order to avoid resin pooling. In some circumstances (e.g. during an early stage of the infusion process) it is possible to increase the resin pressure, for example using a direct infusion apparatus. Alternatively, the resin pressure can be increased by raising the resin container to a level above the base of the layup. This additional pressure in the resin, as measured at the base of the layup and relative to atmospheric pressure, is referred to as the "resin overpressure" at that point along the mould as explained above. The pressure differential that determines the wetting cycle time is the difference between the resin pressure and the pressure in the layup, which is usually a near-vacuum pressure. In the prior art, to prevent resin pooling, the pressure differential is limited to at most 1 bar in the final stage of the infusion. In the inventive method, the pressure differential can exceed this limit for the entire duration of the infusion stage, by "adding" a resin overpressure: for example when a vacuum is established in the layup, and a resin overpressure of 0.1 bar is established, the pressure differential will be approximately 1.1 bar. The inventor has observed that, for every 0.1 bar of resin overpressure, the height at which the resin can be maintained (at that point along the mould) is increased by approximately 1 m. Therefore, the overpressure arrangement is preferably configured to create a pressure differential of 0.1 bar for each metre by which the layup height exceeds the prior art layup height limit.

In an exemplary sequence of steps, the layup for a rotor blade is arranged in the lower mould half, along with the shear web, which effectively divides the mould interior cavity into two separate spaces. A first vacuum bag is arranged in the "trailing edge" space of the mould interior cavity, and a second vacuum bag is arranged in the "leading edge" space of the mould interior cavity. One or more air extraction hoses is arranged as described above. At this stage, an air inlet hose is also placed, for example to extend through the seal at one end of a vacuum bag, so that the open end of the hose is located inside that vacuum bag. The upper mould half is placed over the prepared layup, and the mould is sealed. Resin hoses are then connected to the infusion inlets, a vacuum pump is connected to the air extraction hose(s), and a pressurized air supply is connected to the air inlet hose(s).

The composite moulding assembly is now ready for the resin infusion stage. This is performed by actuating the vacuum pump and controlling valves as appropriate to establish a vacuum in the layup and to allow resin to flow from the resin container and into the layup. At the same time, the desired resin overpressure is also established. In a particularly preferred embodiment of the invention, during the infusion stage, the resin overpressure arrangement is actuated to create a resin overpressure in the order of 0.1 bar for each 1 m of desired additional infusion height.

During resin infusion, the flow front can be monitored as will be known to the skilled person. At least towards the end of the infusion stage, the cavity overpressure means is actuated to convey pressurized air into the vacuum bags to create the desired cavity overpressure in the mould interior cavity.

At some point, the infusion step is complete and the layup is thoroughly wetted, so that curing can commence. Preferably, the cavity overpressure is maintained into the subsequent curing step, or at least until such time as the resin has cured to the point where it is no longer fluid.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows a wind turbine rotor blade moulded using a closed mould technique;
Figure 2 and Figure 3 illustrate limitations of a prior art resin infusion technique;
Figures 4 to 6 illustrate the inventive composite moulding assembly.

In the diagrams, like numbers refer to like objects throughout. Objects in the diagrams are not necessarily drawn to scale.

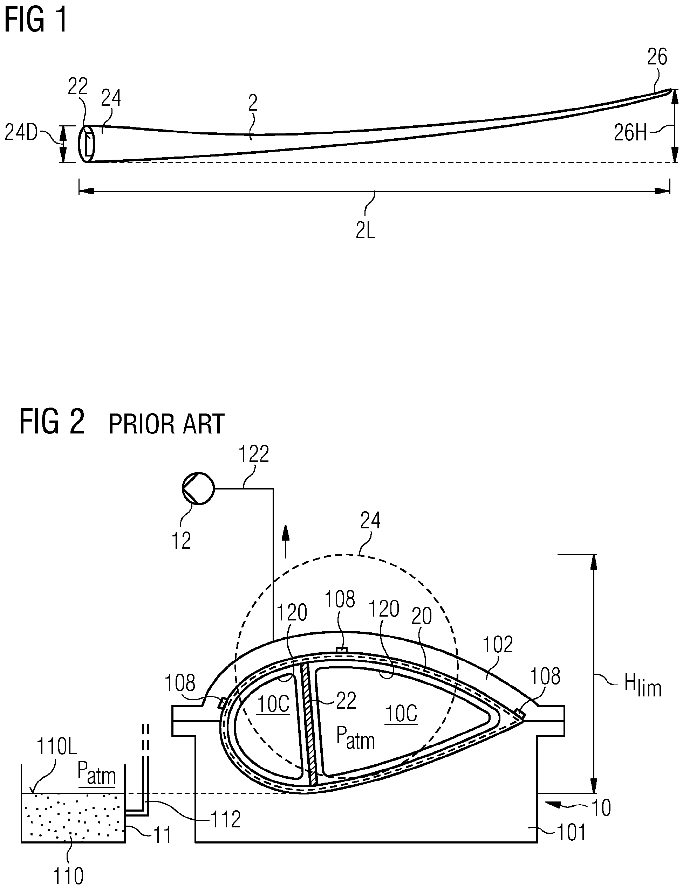

Figure 1 shows a wind turbine rotor blade 2. The diagram indicates the root end 24 and the root diameter 24D.

Generally, a wind turbine rotor blade includes a spar extending in the spanwise direction over most of the rotor blade length 2L, and the shear web 22 of the spar is indicated in the diagram. When manufactured using a known closed-mould technique, the root end diameter 24D is limited by physical constraints of the resin infusion process, namely the achievable resin infusion height under a pressure differential of about 1 atm or 1 bar. The present invention provides a closed mould manufacturing technique which, among others, overcomes these size limitations.

Figure 2 shows a simplified cross-section through a closed mould 10 to illustrate the prior art resin infusion technique referred to above. The mould 10 comprises a lower mould half 101 which receives the entire layup 20, i.e. layers of fibre-reinforced material as well as prefabricated parts such as the shear web 22. The mould 10 comprises an upper mould half 102 which is placed over the layup 20 and joined to the lower mould half 101 to form an airtight seal.

The diagram also shows a resin supply system 11, 112 and a vacuum extraction system 12, 122. The resin supply system comprises a container 11 holding a resin supply 110, with a supply line 112 leading to each resin inlet (provided at one or more suitable points along the mould 10, e.g. at the root end and the tip end), and which lead to resin channels 108 extending through the mould. The resin supply 11 is placed so that the resin surface 110L is no higher than the lowest level of the layup 20 as indicated by the dotted line, in order to avoid resin pooling, as will be known to the skilled person.

The vacuum extraction system comprises a vacuum pump 12 and air extraction lines 122 connected to one or more vacuum extraction ports to allow air to be extracted from the layup 20 as indicated schematically. To facilitate air extraction, vacuum bags 120 are placed in the interior spaces of the layup 20.

The pressure at the surface of the resin 110 is atmospheric pressure Pₐₜₘ (at most 1 bar, for example when the manufacturing facility is located near sea level). When the vacuum pump 12 has extracted as much air as possible from the layup 20, the resulting vacuum (approaching 0 bar) can then draw resin into the layup 20. However, the achievable height Hₗᵢₘ is limited by the density of the resin and the pressure differential, which in turn is determined by the atmospheric pressure in the mould interior, and the achievable vacuum in the layup. In practice, a pressure differential of at most 1 atm can be achieved. The maximum resin height Hₗᵢₘ effectively places a limit on the largest layup dimension, e.g. the diameter 24D at the root end 24 (indicated by ghost lines).

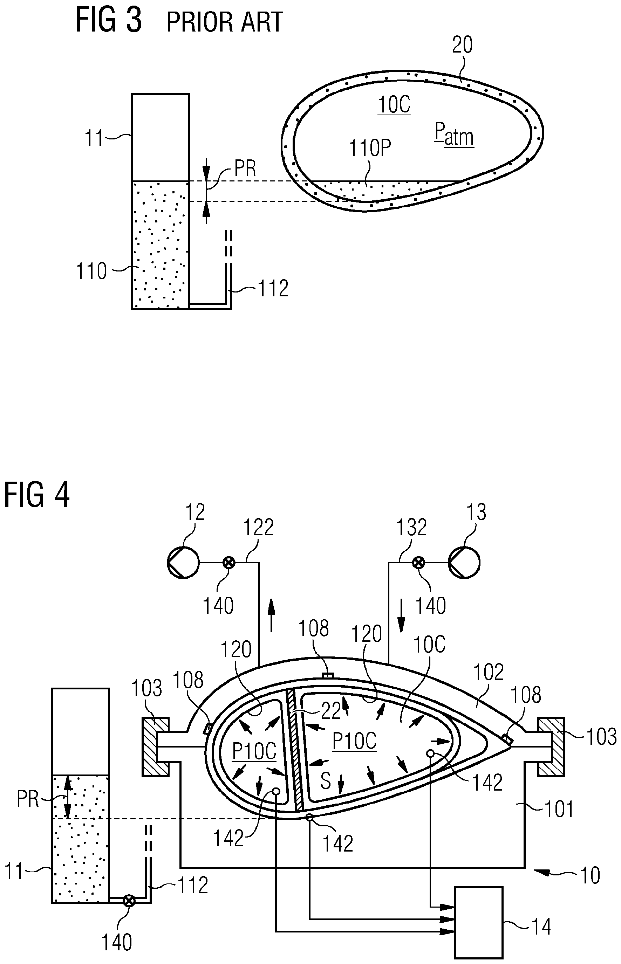

It is known to apply an overpressure to the resin 110 in order to increase the infusion rate during an initial stage of the infusion process, for example by raising the resin level. However, maintaining such a resin overpressure into the curing stage is generally not practicable: as shown in simplified form in Figure 3, a resin overpressure PR causes resin pools 110P to form, since the resin pressure (as measured in the lowest region of the layup) is not counteracted by the atmospheric pressure Pₐₜₘ in the cavity 10C.

In practice, the need to reduce the pressure differential for the final infusion stages imposes a height limitation on the part being moulded when using a prior art infusion technique. This limit can apply to the diameter 24D at the root end 24 and/or to the height 26H at the tip end 26, whichever dimension is greatest. The diagram indicates that the tip end height 26H may be measured relative to a suitable reference, for example a line orthogonal to a plane at the root end. The achievable root end diameter 24D essentially determines the achievable rotor blade length 2L. These rotor blade size constraints, in turn, determine the maximum power output that will be achievable by the wind turbine for which the rotor blades are being manufactured.

Figures 4 - 6 each show a simplified cross-section through a closed mould 10 to illustrate steps of the inventive approach. In Figure 4, the mould 10 comprises a lower mould half 101 which receives the entire layup 20 as described above, and an upper mould half 102 which is placed over the layup 20 and joined to the lower mould half 101 to form an airtight seal.

Similar to the configuration of Figure 2, the inventive composite moulding assembly 1 comprises a resin infusion arrangement, in this case with a closed resin container 11 connected by one or more supply lines 112 to resin inlets and resin channels 108 in the mould 10; and a vacuum pump 12 connected to extraction ports 104 to allow air to be extracted from the layup 20. Here also, vacuum bags 120 are placed in the interior spaces of the layup 20.

The inventive assembly 1 also comprises a pressurized air supply 13 connected by means of air inlet hoses 132 to the interior of the vacuum bags 120.

The diagram also indicates a controller 14, configured to open/close a suitable arrangement of (schematically indicated) valves 140 to regulate resin flow, air extraction, and air injection in response to measurements provided by suitably placed sensors, for example pressure sensors 142 as indicated to monitor the resin pressure in the base of the layup 20 and the air pressure inside the cavities 10C. Other sensors such as temperature sensors, flow-front sensors etc., may be deployed as will be known to the skilled person. In this way, while air is being extracted from the layup 20 and resin is being infused through the layup 20, a suitable resin overpressure PR can be established in the resin while - at least towards the end of the infusion stage - a suitable cavity overpressure P10C is established in each interior cavity 10C. These overpressures PR, P10C can be adjusted as appropriate during the resin infusion procedure, so that the resin overpressure PR achieves an advantageously uniform wetting of the layup, and the cavity overpressure P10C prevents resin pool formation.

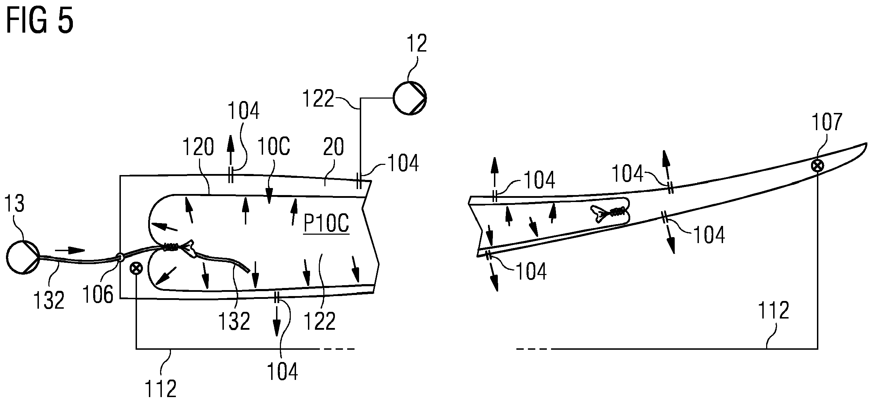

Figure 5 shows a simplified span-wise cross-section through the layup 20 in a closed mould (not shown for simplicity) for a wind turbine rotor blade, showing how an air inlet hose 132 can be arranged to terminate inside a vacuum bag 120. The diagram also shows the open end of an air extraction hose 122 placed between the layup 20 and the exterior of the vacuum bag 120.

As explained above, resin inlet ports 107 and resin channels convey resin to the layup. During resin infusion, the vacuum pump 12 is actuated to extract air from the layup 20; an overpressure PR is created at the resin (as measured in the lower part of the layup), and a corresponding overpressure P10C is created in the cavities 10C. This allows resin to infuse evenly throughout the layup 20 without pooling, even though the resin overpressure PR is maintained until completion of the infusion stage.

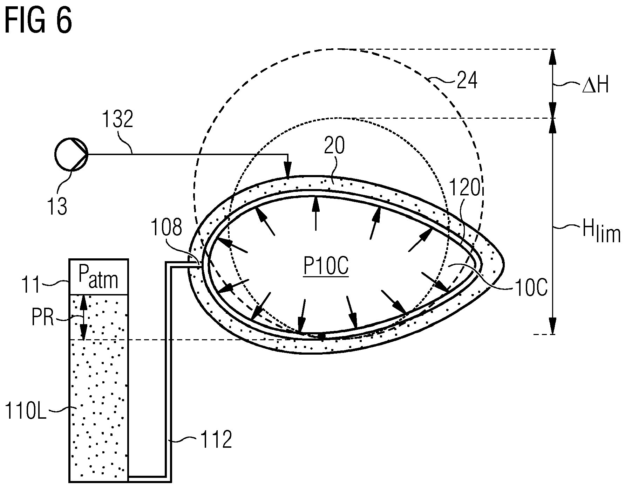

Figure 6 is a simplified edge-wise cross-section through the mould of Figure 5, showing a stage during resin infusion. Here, the vacuum pump 12 (not shown) has been actuated to establish a vacuum in the layup 20, and a desired resin overpressure PR has been established, indicated schematically as the difference the raised resin level and the lowest region in the layup (at that point along the mould). The vacuum in the layup 20 now draws resin into the FRM layers 20. The pressurized air supply 13 is actuated to establish an overpressure P10C in the cavities 10C defined by the layup 20 and the vacuum bags 120, for example at some time near completion of the infusion stage. The overpressure P10C in the cavities 10C ensures that resin cannot pool in the lower regions of the layup 20, and allows the resin overpressure PR to be maintained throughout the entire infusion process.

The height to which the resin can climb in the mould 10 is increased (over the prior art limitation Hₗᵢₘ) by an amount ΔH which is proportional to the amount by which the resin overpressure PR exceeds atmospheric pressure Pₐₜₘ. In practice, a height gain ΔH of up to 1 m for each 0.1 bar of resin overpressure PR is made possible by the inventive composite moulding assembly 1. This in turn allows a corresponding increase in layup height, for example an increase in rotor blade root end diameter 24D (indicated by the dashed line) compared to the smaller diameter Hₗᵢₘ achievable in the prior art approach (indicated by the dotted line), and a related increase in rotor blade length 2L. Longer rotor blades, in turn, can facilitate the manufacture of wind turbines with increased power output.

Alternatively, the inventive composite moulding assembly 1 can be deployed without increasing the mould size, and can instead take advantage of a faster resin flow rate, i.e. a shorter infusion time and shorter manufacturing cycle. For example, using the inventive composite moulding assembly 1, the infusion time can be reduced by up to 10% for each 0.1 bar of resin overpressure and cavity overpressure. As explained above, a composite moulded using the inventive approach can be significantly lighter than an equivalent composite moulded using a prior art approach, since the quantity of resin can be reduced to a favourable minimum. Furthermore, the structural strength of a composite moulded using the inventive approach can be increased owing to the favourable compression of the layup during the infusion and curing stages.

Since the overpressure P10C in the cavities 10C will act against all interior surfaces of the layup 20 as indicated by the outwardly-directed arrows in Figure 6, the mould 10 of the inventive composite moulding assembly 1 is preferably equipped with a suitable closure system, for example robust clamps 103 about the outer edges of the mould halves 101, 102 as indicated in Figure 4. Equally, the mould 10 can be constructed so that a downward pulling force can be applied to the upper mould half 102. The closure system ensures that the mould halves 101, 102 are securely closed so that the mould 10 remains under an airtight seal while subject to the cavity overpressure P10C.

Although the present invention has been disclosed in the form of preferred embodiments and variations thereon, it will be understood that numerous additional modifications and variations could be made thereto without departing from the scope of the invention. For example, instead of using pressurized air to establish the cavity overpressure, any suitable pressurized gas can be used.

For the sake of clarity, it is to be understood that the use of "a" or "an" throughout this application does not exclude a plurality, and "comprising" does not exclude other steps or elements.

## Claims

1. A composite moulding assembly (1) comprising
- a mould (10) for receiving a layup (20), a number of resin inlets and resin channels (108) arranged about the mould (10), and a number of air extraction ports (104) arranged about the mould (10);
- a resin infusion arrangement configured to convey resin (110) to the resin inlets;
- a vacuum arrangement comprising a number of vacuum bags (120) arranged to separate the layup (20) from a mould interior cavity (10C), and a means (12, 122) of extracting air from the layup (20); and
- a cavity overpressure arrangement (13, 132) configured to create a cavity overpressure (P10C) in the mould interior cavity (10C) during a resin infusion procedure.

2. A composite moulding assembly according to the preceding claim, wherein the cavity overpressure arrangement (13, 132) comprises a pressurized air supply (13) and a means (132, 140) of conveying pressurized air into each vacuum bag (120) of the vacuum arrangement.

3. A composite moulding assembly according to any of the preceding claims, wherein the mould (10) comprises a lower mould half (101), an upper mould half (102), and a means (103) of sealing the mould halves (101, 102) against the cavity overpressure (P10C).

4. A composite moulding assembly according to any of the preceding claims, comprising a resin overpressure arrangement configured to establish a resin overpressure (PR) in the layup (20).

5. A composite moulding assembly according to any of the preceding claims, comprising a controller (14) configured to actuate components of the vacuum arrangement, the cavity overpressure arrangement and the resin overpressure arrangement.

6. A method of moulding a composite (2), which method comprises
- forming a layup (20) in the mould (10) of a composite moulding assembly (1) according to any of claims 1 to 5;
- arranging a number of vacuum bags (120) to separate the layup (20) from a mould interior cavity (10C);
- actuating the vacuum arrangement to extract air from the layup (20);
- actuating the resin infusion arrangement to convey resin (110) to the resin inlets; and
- actuating the cavity overpressure arrangement to create a cavity overpressure (P10C) in the mould interior cavity (10C) .

7. A method according to the preceding claim, wherein the cavity overpressure (P10C) is established towards completion of the resin infusion stage.

8. A method according to the preceding claim, comprising a subsequent step of curing the infused resin, and wherein the cavity overpressure (P10C) is maintained during the curing stage.

9. A method according to any of the preceding method claims, comprising a step of actuating a resin overpressure arrangement to create a resin overpressure (PR) in the layup (20) during the resin infusion stage.

10. A method according to the preceding claim, wherein a resin overpressure (PR) is maintained until completion of the infusion stage.

11. A method according to any of the preceding method claims, wherein the resin overpressure (PR) at any point along the mould (10) is at least 0.1 bar.

12. A method according to the preceding claim, wherein the cavity overpressure (P10C) is at least as great as the greatest resin overpressure (PR).

13. A method according to any of the preceding method claims, wherein the layup (20) is formed for a wind turbine rotor blade (2), and wherein the method comprises a step of arranging a first vacuum bag (120) on one side of a shear web (22) arranged in the layup (20), and arranging a second vacuum bag (120) on the other side of the shear web (22).

14. A wind turbine rotor blade (2) manufactured using the composite moulding assembly (1) according to any of claims 1 to 5.

15. A wind turbine rotor blade according to the preceding claim, wherein the diameter (24D) of the root end (24) and/or the height (26H) of the tip end (26) is at least 7 m, more preferably at least 7.5 m.
